# EUROPEAN PATENT APPLICATION

(11) **EP 2 905 960 A1**
(43) Date of publication of application: **12.08.2015**
(21) Application number: 15150806.6
(22) Date of filing: 12.01.2015
(51) Int. Cl.: H04N 13/04

(54) **Display apparatus and controlling method thereof**

(30) Priority: 06.02.2014 KR 20140013752
(71) Applicant: Samsung Electronics Co., Ltd, Gyeonggi-do 443-742 (KR)
(72) Inventor: Kang, Jin-mo, Gyeonggi-do (KR); Kim, Sung-yeol, Gyeonggi-do (KR); Lee, Ho-young, Gyeonggi-do (KR); Shin, Seung-yong, Gyeonggi-do (KR)
(74) Representative: Appleyard Lees

(57) **Abstract**

A multiview image display apparatus (100) includes: a display configured to switch an operation mode of the display between a 3-dimensional (3D) mode and a 2-dimensional (2D) mode and provide a multiview image in the 3D mode; a detector (120) configured to detect at least one of a viewing position and a viewing posture of a viewer; and a controller (130) configured to, in response to at least one of the viewing position and the viewing posture of the viewer meeting a preset criteria, control the display to switch an operation mode of the display from the 3D mode to the 2D mode and to provide a 2D image.

## Description

### BACKGROUND

### 1. Field

The present general inventive concept generally relates to providing a display apparatus and a controlling method thereof, and more particularly, to providing a multiview image display apparatus and a controlling method thereof.

### 2. Description of the Related Art

The development of electronic technologies has brought about the development and distribution of various types of electronic devices. In particular, display apparatuses such as TVs that are one kind of home appliances used the most in homes have been rapidly developed for several years.

Advances in performances of display apparatuses have variously increased types of contents displayed on the display apparatuses. In particular, stereoscopic display systems through which viewers may view 3 dimensional (3D) contents have been developed and distributed.

A stereoscopic display apparatus may be realized as various types of display apparatuses such as a 3D TV used in a home, various types of monitors, a portable phone, a personal digital assistant (PDA), a personal computer (PC), a set-top PC, a tablet PC, an electronic frame, a kiosk PC, etc. Also, a 3D display technology may be used in a home and various fields such as science, medical science, design, education, advertisement, computer games, etc.

A stereoscopic display system may be generally classified into a glassless type system, through which a viewer may view contents without glasses, and a glasses type system, through which the viewer may view contents only with glasses.

The glasses type system may provide a satisfactory 3D effect, but a viewer may necessarily use glasses to view contents through the glasses type system. Through the glassless type system, the viewer may view a 3D image without glasses, and thus the development of glassless type systems has been consistently discussed.

However, if the viewer strays from a position appropriate for viewing a 3D image, the viewer may not properly view the 3D image through the glassless types system.

### SUMMARY

One or more exemplary embodiments may address at least the above problems and/or disadvantages and other disadvantages not described above. Also, one or more exemplary embodiments are not required to overcome the disadvantages described above, and an exemplary embodiment may not overcome any of the problems described above.

One or more exemplary embodiments provide a display apparatus that changes an operation mode from a 3-dimensional (3D) mode into a 2-dimensional (2D) mode based on at least one of a viewing position and a viewing posture of a viewer, and a controlling method thereof.

According to an aspect of one or more exemplary embodiments, there is provided a display apparatus including: a display configured to switch an operation mode of the display between a 3-dimensional (3D) mode and a 2-dimensional (2D) mode and provide a multiview image in the 3D mode; a detector configured to detect at least one of a viewing position and a viewing posture of a viewer; and a controller configured to, in response to at least one of the viewing position and the viewing posture of the viewer meeting a preset criteria, control the display to switch an operation mode of the display from the 3D mode to the 2D mode and to provide a 2D image.

In response to the detector detecting that the viewing position of the viewer corresponds to a pseudo stereo zone of the multiview image, the controller may be configured to control the display to switch from the 3D mode to the 2D mode and to provide the 2D image.

In response to the detector detecting that the viewing position of the viewer corresponds to a position straying from a preset distance range from the display apparatus, the controller may be configured to control the display to switch from the 3D mode to the 2D mode and to provide the 2D image.

In response to the detector detecting that the viewing posture of the viewer corresponds to a posture in which light corresponding to the multiview image is not incident onto left and right eyes of the viewer, the controller may be configured to control the display to switch from the 3D mode to the 2D mode and to provide the 2D image.

The display may include: a display panel configured to display a plurality of images that have different views and are sequentially and repeatedly arranged; a lens unit configured to be disposed in front of the display panel to provide a multiview corresponding to different views of viewing zones; and a polarizing panel configured to be disposed between the display panel and the lens unit.

The controller may be further configured to control the polarizing panel to change a polarization direction of light incident from the display panel onto the lens unit in the 2D mode into a direction different from the 3D mode in order to turn off a function of the lens unit.

The display apparatus may further include an imaging unit configured to capture an image of the viewer. The detector may be further configured to detect at least one of the viewing position and the viewing posture of the viewer from the captured image based on at least one of positions, shapes, and sizes of eyes of the viewer.

In response to at least one of the viewing position and the viewing posture of the viewer meeting a preset criteria to switch the operation mode of the display unit from the 3D mode to the 2D mode, the controller may be further configured to provide a notification message.

The notification message may include at least one of a display message and a voice message.

According to another aspect of one or more exemplary embodiments, there is provided a method of controlling a display apparatus. The method may include: operating a display in a 3D mode, wherein the display unit provides a multiview image in the 3D mode; detecting at least one of a viewing position and viewing posture of a viewer; and in response to at least one of the viewing position and the viewing posture of the viewer meeting a preset criteria, switching an operation mode of the display from the 3D mode to a 2D mode and providing a 2D image.

The switching may include switching in response to the viewing position of the viewer corresponding to a position for viewing an image corresponding to a pseudo stereo zone of the multiview image, switching the display from the 3D mode to the 2D mode and providing the 2D image.

The switching may include switching in response to the viewing position of the viewer corresponding to a position straying a preset distance range from the display apparatus, switching the display from the 3D mode to the 2D mode and providing the 2D image.

The switching may include switching in response to the viewing posture of the viewer corresponding to a posture in which light corresponding to the multiview image is not incident onto left and righty eyes of the viewer, the display from the 3D mode to the 2D mode and providing the 2D image.

The display may include: a display panel configured to display a plurality of images that have different views and are sequentially and repeatedly arranged; a lens unit configured to be disposed in front of the display panel to provide a multiview corresponding to different views of viewing zones; and a polarizing panel configured to be disposed between the display panel and the lens unit.

The polarizing panel may be controlled to change a polarization direction of light incident from the display panel onto the lens unit in the 2D mode into a direction different from the 3D mode in order to turn off a function of the lens unit.

The method may further include: capturing an image of the viewer. At least one of the viewing position and the viewing posture of the viewer may be detected from the captured image based on at least one of positions, shapes, and sizes of eyes of the viewer.

The method may further include:in response to at least one of the viewing position and the viewing posture of the viewer meeting a preset criteria to switch the operation mode of the display unit from the 3D mode to the 2D mode, providing a notification message.

The notification message may include at least one of a display message and a voice message.

According to an aspect of one or more exemplary embodiments, there is provided a display apparatus including: a display configured operate in a 3-dimensional (3D) mode and a 2-dimensional (2D) mode; and a controller configured to, in response to at least one of a viewing position and a viewing posture of a viewer disrupting a viewing of 3D content while the display is operating in a 3D mode, control the display to switch an operation mode of the display from the 3D mode to the 2D mode and to provide 2D content.

The display apparatus may further include: an image capturer configured to capture an image of the viewer; and a detector configured to detect at least one of the viewing position and the viewing posture of the viewer from the captured image based on at least one of the position, size, and shape of the viewer's eyes and body.

According to another aspect of one or more exemplary embodiments, there is provided a method of changing an operation mode of a display. The method may include: providing 3D content in a 3D operation mode of the display; switching, in response to at least one of a viewing position and a viewing posture of a viewer disrupting a viewing of the 3D content while the display is in the 3D operation mode, the operation mode of the display from the 3D operation mode to a 2D operation mode; and providing a 2D content in the 2D operation mode of the display.

The method of changing an operation mode of a display may further include: capturing an image of the viewer; and detecting at least one of the viewing position and the viewing posture of the viewer from the captured image based on at least one of the position, size, or shape of the viewer's eyes and the position, size, or shape of the viewer's body.

### BRIEF DESCRIPTION OF THE DRAWINGS

The above and/or other aspects will be more apparent by describing certain exemplary embodiments with reference to the accompanying drawings, in which:
FIG. 1 is a view illustrating an operation of an a glassless 3-dimensional (3D) display apparatus according to an exemplary embodiment;
FIG. 2 is a block diagram of a display apparatus according to an exemplary embodiment;
FIG. 3 is a view illustrating a display unit according to an exemplary embodiment;
FIGS. 4A through 4C are views illustrating a display unit and a method of providing a 2D and/or 3D mode by using the display unit according to an exemplary embodiment;
FIG. 5 is a view briefly illustrating a method of providing a mode according to an exemplary embodiment;
FIGS. 6 through 8 are views illustrating an operation mode that is switched from a 3D mode to a 2D mode according to various exemplary embodiments; and
FIG. 9 is a flowchart of a method of controlling a display apparatus according to an exemplary embodiment.

### DETAILED DESCRIPTION OF THE EXEMPLARY EMBODIMENTS

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

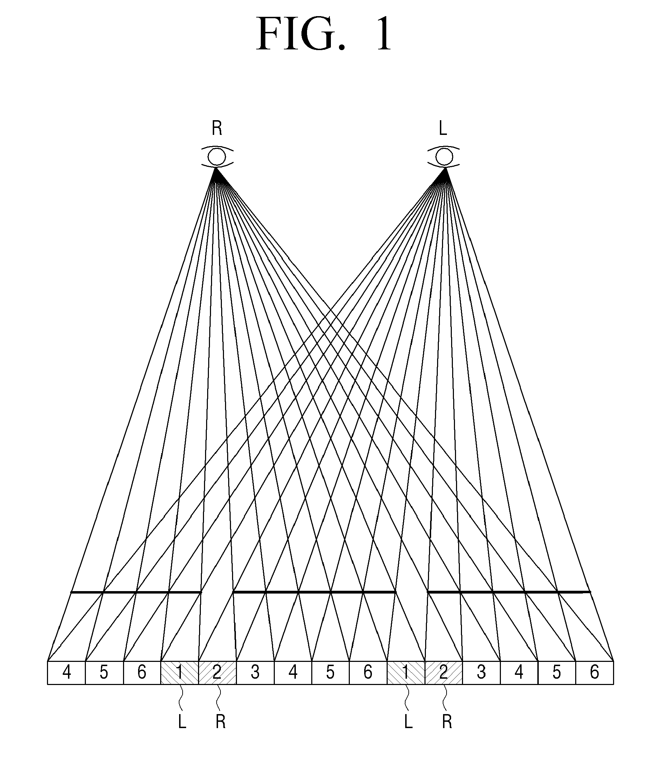

FIG. 1 is a view illustrating an operation of a glassless 3-dimensional (3D) display apparatus, according to an exemplary embodiment.

FIG. 1 illustrates an operation method of an apparatus that displays a multiview image to provide a stereoscopic image in a glassless mode, according to an exemplary embodiment of the present general inventive concept. Here, the multiview image includes a plurality of images that are acquired by capturing an object at different angles. In other words, the plurality of images that are captured at the different angles are refracted at different angles, and an image that is focused in a position (for example, about 3 m) distant from a preset distance referred to as a viewing distance is provided. The position in which the image is formed is referred to as a viewing zone. Therefore, if one eye of a view is positioned in a first viewing zone, and the other eye of the viewer is positioned in a second viewing zone, the viewer may experience a 3D effect.

For example, FIG. 1 illustrates a display operation of a multiview image having a total of six views. Referring to FIG. 1, the glassless 3D display apparatus projects light corresponding to a first of the six views onto a left eye of the viewer and light corresponding to a second of the six views onto a right eye of the viewer. Therefore, the viewer may view an image on different views through the left and right eyes and thus experience a 3D effect.

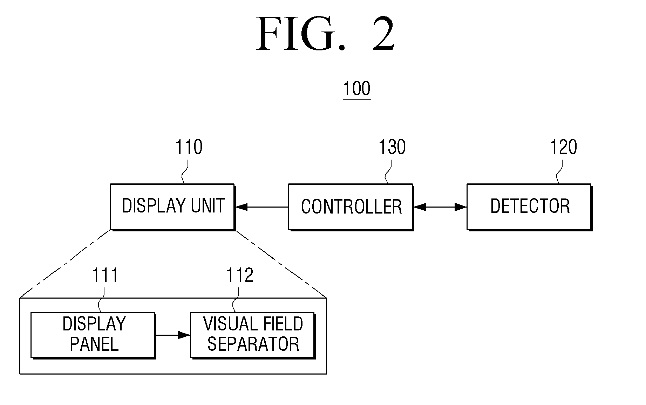

FIG. 2 is a block diagram of a display apparatus 100, according to an exemplary embodiment.

The display apparatus 100 of FIG. 2 may be realized as various types of display apparatuses such as, as non-limiting examples a TV, a monitor, a portable phone, a personal digital assistant (PDA), a personal computer (PC), a set-top PC, a kiosk PC, a tablet PC, an electronic frame, etc.

Referring to FIG. 2, the display apparatus 100 includes a display unit 110, i.e. a display, a detector 120, and a controller 130.

The display unit 110 provides a multiview (or a multi-optical view) in a 3D mode. For this, the display unit 110 includes a display panel 111 and a visual field separator 112 that are for providing the multiview.

The display panel 111 includes a plurality of pixels each having a plurality of sub-pixels. Here, each of the sub-pixels may include red (R), green (G), and blue (B) sub-pixels. In other words, the pixels having the R, G, and B sub-pixels may be arranged in a plurality of rows and columns to constitute the display panel 111. The display panel 111 may be realized as various types of display units such as, as non-limiting examples, a liquid crystal display panel (LCD panel), a plasma display panel (PDP), an organic light-emitting diode (OLED), a vacuum fluorescent display (VFD), a field emission display (FED), an electroluminescence display (ELD), etc.

The display panel 111 displays an image frame. In detail, the display panel 111 may display the image frame in which a plurality of images having different views are sequentially and repeatedly arranged.

The visual field separator 112 may be disposed in front of the display panel 111 to provide different views to different viewing zones, i.e., a multiview.

For example, the visual field separator 112 may be realized as a lenticular lens including a plurality of lens areas. Therefore, the lenticular lens may refract an image displayed on the display panel 111 through plurality of lens areas. Each of the lens areas may be formed in a size corresponding to at least one pixel to differently disperse light penetrating each pixel to different viewing zones.

The detector 120 detects at least one of a viewing position and a viewing posture of the viewer. For this, the detector 120 may include an imaging unit, i.e. an image capturer, (not shown) or may be connected to the imaging unit to receive a captured image. However, for convenience of description, the detector 120 will be described as being connected to the imaging unit to receive the captured image.

The imaging unit captures the viewer. The imaging unit includes a lens module including a lens and an image sensor. A shape that is input through the lens is input as an optical signal into the image sensor operating as a film, and the image sensor converts the input optical signal into an electric signal and transmits the electric signal to the detector 120. For example, the imaging unit may be realized as a stereo camera, an infrared camera, a depth camera, or the like.

Here, the imaging unit may be disposed in an outer area of the display apparatus 100. For example, the imaging unit may be disposed in an upper center, left lower center, or right lower center bezel area but is not limited thereto.

The detector 120 may detect a face area of the viewer from the viewer captured image received from the imaging unit and detect at least one of the viewing position and the viewing posture of the viewer based on the detected face area. The imaging unit may, as non-limiting examples, include a still or a video camera, and may capture an image of the viewer in various ranges of the electromagnetic spectrum.

Various existing methods may be used as a method of detecting the face area. In detail, methods using a direct recognition method and statistics may be used. The direct recognition method makes a rule by using a contour skin color of a face image displayed on a screen and a physical characteristic such as sizes of elements, a distance between the elements, or the like, and perform comparing, checking, and measuring according to the rule. The method using the statistics may detect the face area according to a learned algorithm.

In other words, the method using the statistics is a method of making characteristics of an input image into data, comparing the data with a prepared large capacity database (DB) (the face and shapes of other objects), and analyzing the data and the prepared large capacity DB. In particular, a multilayer perceptron (MLP) method and a support vector machine (SVM) method may be used to detect the face area according to the learned algorithm. A detailed description of this is omitted.

The detector 120 may detect a horizontal viewing position of the viewer, i.e., a viewing distance, based on information received along with the captured image from a stereo camera, an infrared camera, a depth camera, or the like. Here, the viewing distance may be a distance between the display apparatus 100 and the viewer.

The detector 120 may also detect the horizontal viewing position based on a position of the viewer included in the captured image. Here, the horizontal viewing position refers to a viewing position on a horizontal line based on the display apparatus 100.

The detector 120 may detect at least one of the viewing position and the viewing posture based on at least one of a size, a position, and a shape of the detected face area, and sizes, positions, and shapes of eyes included in the face area. For example, the detector 120 may detect whether the viewer is in a right viewing posture or in a lying viewing posture based on the shapes of the eyes included in the detected face area.

However, the above-described method is only an exemplary embodiment, and the viewing position and the viewing posture of the viewer may be detected by various methods.

The controller 130 controls an overall operation of the display apparatus 100.

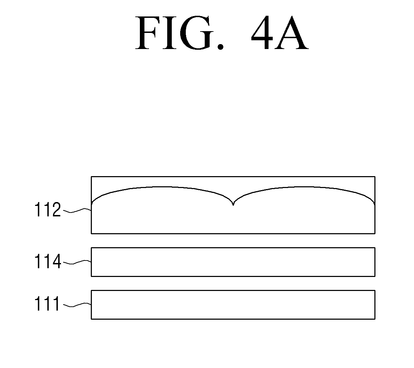

In particular, if at least one of the viewing position and the viewing posture of the viewer detected by the detector 120 meets a preset criteria, the controller 130 may control an operation mode (a driving mode) of the display unit 110 to switch a 3D mode to a 2D mode in order to provide a 2D image. The operation mode of the display unit 110 will be described in detail later with reference to FIGS. 4A through 4C.

If it is determined that the viewing position of the viewer corresponds to a position in which the viewer views an image of a pseudo stereo zone of a multiview image when the display unit 110 operates in the 3D mode for providing a glassless multiview 3D image, the controller 130 may control an operation of the display unit 110 to switch the 3D mode to the 2D mode in order to provide a 2D image. Here, the pseudo stereo zone refers to a position in which views are arranged in reverse orders in a glassless multiview image. The views that are arranged in reverse orders may refer to viewing positions that are incident into the left and right eyes of the viewer.

Alternatively, if it is determined that the viewing position of the viewer corresponds to a position in which the viewer strays from a preset distance range from the display apparatus 100 when the display unit 110 operates in the 3D mode, the controller 120 may control the operation of the display unit 110 to switch the 3D mode to the 2D mode in order to provide the 2D image. For example, if an optimum viewing position is at a 3 meters (m) distance from the display apparatus 100, the position in which the viewer strays from the preset distance range may be closer or more distant than 3 m.

Alternatively, if it is determined that the viewing posture of the viewer corresponds to a posture of the viewer in which multiview image light is not incident into the left and right eyes of the viewer, the controller 130 may control the operation of the display unit 110 to switch the 3D mode to the 2D in order to provide the 2D image. For example, a posture in which the viewer lies, a posture in which the viewer tilts the viewer's head, or the like may correspond to the above posture.

Also, if at least one of the viewing position and the viewing posture of the viewer meets the preset criteria so as to switch the operation mode of the display unit 110 from the 3D mode to the 2D mode, the controller 130 may provide a notification message. Here, the notification message may be provided as one of a message displayed on a screen and a voice message. Therefore, the viewer who is in a viewing position or a viewing posture inappropriate for viewing a 3D image may be included into an optimum viewing position and an optimum viewing posture.

In the 3D mode, the controller 130 may control to render and display an image frame so as to arrange different views at regular distances from one another in a reference viewing zone based on a distance between the display panel 111 and the visual field separator 112. In this case, each of the views may be generated by using a plurality of virtual view images, which will be described in detail with reference to the attached drawings.

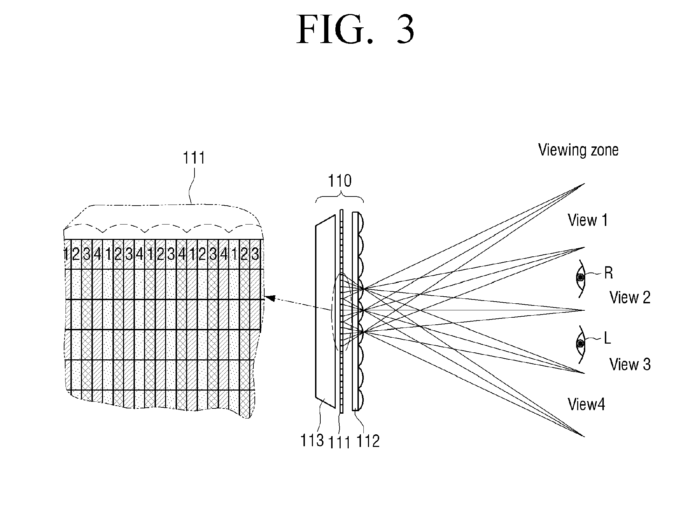

FIG. 3 is a view illustrating the display unit 110, according to an exemplary embodiment of the present general inventive concept.

Referring to FIG. 3, the display unit 110 includes a display panel 111, a lenticular lens 112, and a backlight unit 113. Here, the display unit 110 is realized as an LCD panel. If the display unit 110 is realized as a panel using a self-emission element such as an OLED panel, the backlight unit 113 may be omitted.

As shown in FIG. 3, the display panel 111 includes a plurality of pixels that are divided into a plurality of columns. Images having different views are respectively arranged in the columns. Referring to FIG. 3, a plurality of images 1, 2, 3, and 4 having different views are sequentially and repeatedly arranged. In other words, pixel columns are arranged in groups that are numbered to 1, 2, 3, and 4. A graphic signal that is applied to a panel is arranged so that pixel column 1 displays a first image, and pixel column 2 displays a second image.

The backlight unit 113 provides light to the display panel 111. The images 1, 2, 3, and 4 that are formed on the display panel 111 are projected onto the visual field separator 112 by the light provided from the backlight unit 113, and the visual field separator 112 disperses lights of the projected images 1, 2, 3, and 4 to transmit the lights toward the viewer. In other words, the visual field separator 112 generates exit pupils in a position of the viewer, i.e., at a particular viewing distance. As shown in FIG. 3, if the display unit 110 is realized as a lenticular lens array, a thickness and a diameter of the lenticular lens 112 may be designed so that the exit pupils generated by the columns are separated from each other at an average binocular center distance shorter than 65 mm. Also, if the display unit 110 is realized as a parallax barrier, distances between slits, etc. may be designed so that the exit pupils are separated from each other at the average binocular center distance shorter than 65 mm. The separated image lights respectively form viewing zones. In other words, as shown in FIG. 3, if first through fourth views are formed, and the left and right eyes of the viewer are respectively on the second and third views, the viewer may view the 3D image.

FIGS. 4A through 4C are views illustrating the display unit 110 and a method of providing a 2D and/or 3D mode by using the display unit 110, according to an exemplary embodiment.

As shown in FIG. 4A, the display unit 110 according to the present exemplary embodiment includes a display panel 111, a lenticular lens 112, and a polarizing panel 114.

Operations of the display panel 111 and the lenticular lens 112 are as described above with reference to FIG. 3, and thus their detailed descriptions are omitted.

The polarizing panel 114 may provide different polarization directions in 2D and 3D modes.

Unpolarized light of a backlight unit (not shown) becomes particular polarized light (an ordinary ray and/or an extraordinary ray) through the display panel 111, for example, an LCD panel, and the polarizing panel 114 may maintain or change the particular polarized light.

In detail, the polarizing panel 114 may adjust a polarization direction of light that has passed through the display panel 111. Therefore, in the 2D mode, the light that has passed through the display panel 111 passes through the lenticular lens 112 without changes of advancing directions thereof. Also, in the 3D mode, the advancing directions of the light that has passed through the display panel 111 are refracted by the lenticular lens 112 to separate visual fields from one another. In other words, the polarizing panel 114 changes polarization of incident light to turn off a lens function of the lenticular lens 112 in the 2D mode. For example, a polarize switch (PS) panel may be used as the polarizing panel 114 and may alternately change a P wave and an S wave in the 2D mode and the 3D mode under control of the controller 130.

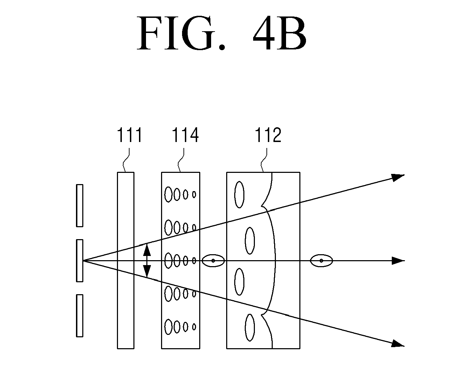

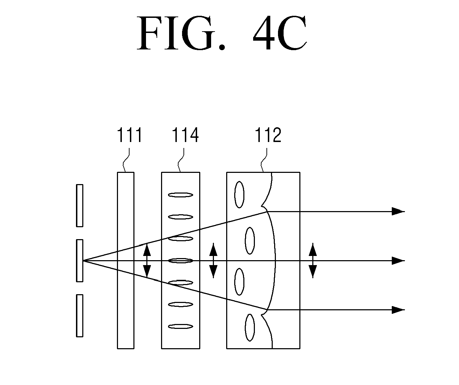

For example, in the 2D mode, as shown in FIG. 4B, incident light may pass through the lenticular lens 112 without changes of advancing directions thereof. In the 3D mode, as shown in FIG. 4C, advancing directions of incident light may be refracted by the lenticular lens 112 to separate visual fields from one another.

However, the method described with reference to FIGS. 4A through 4C is only an example, and a method of switching between a 3D mode to a 2D mode is not limited thereto.

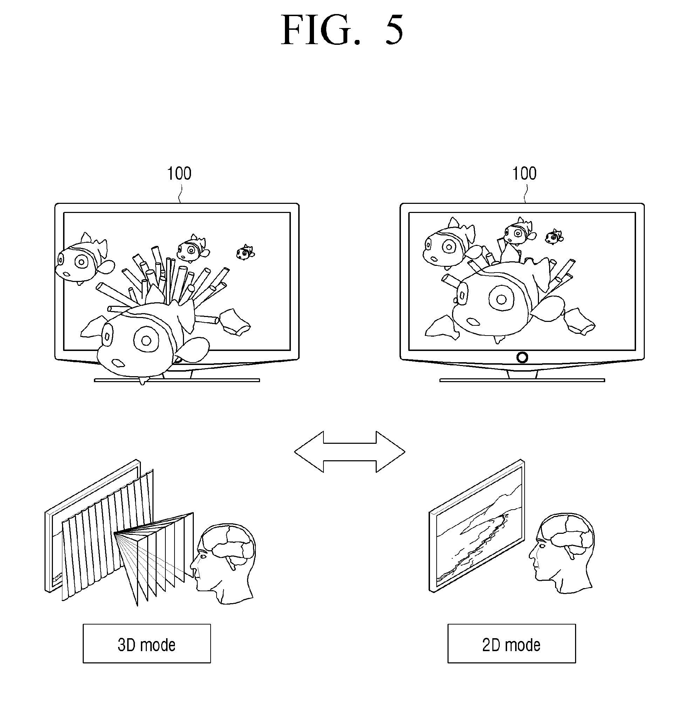

FIG. 5 is a view briefly illustrating a method of providing a mode, according to an exemplary embodiment.

If a preset event occurs when the display apparatus 100 operates in a 3D mode as shown in left drawings of FIG. 5, the display apparatus 100 operates in a 2D mode to provide a 2D image as shown in right drawings of FIG. 5. In other words, if the preset event occurs, the display apparatus 100 may switch an operation mode of the display unit 110 to the 2D mode. A detailed method is described above with reference to FIGS. 4A through 4C, and thus a detailed description thereof is omitted.

Here, the preset event may be at least one of an event where at least one of a viewing position and a viewing posture of a viewer meets a preset criteria, this may include an event where a viewing distance of the viewer strays from a preset optimum viewing distance, an event where a horizontal viewing position of the viewer corresponds to a pseudo stereo zone or strays from an optimum horizontal viewing range, and an event where the viewing posture of the viewer is a posture in which images having different views are not appropriately provided to left and right eyes of the viewer.

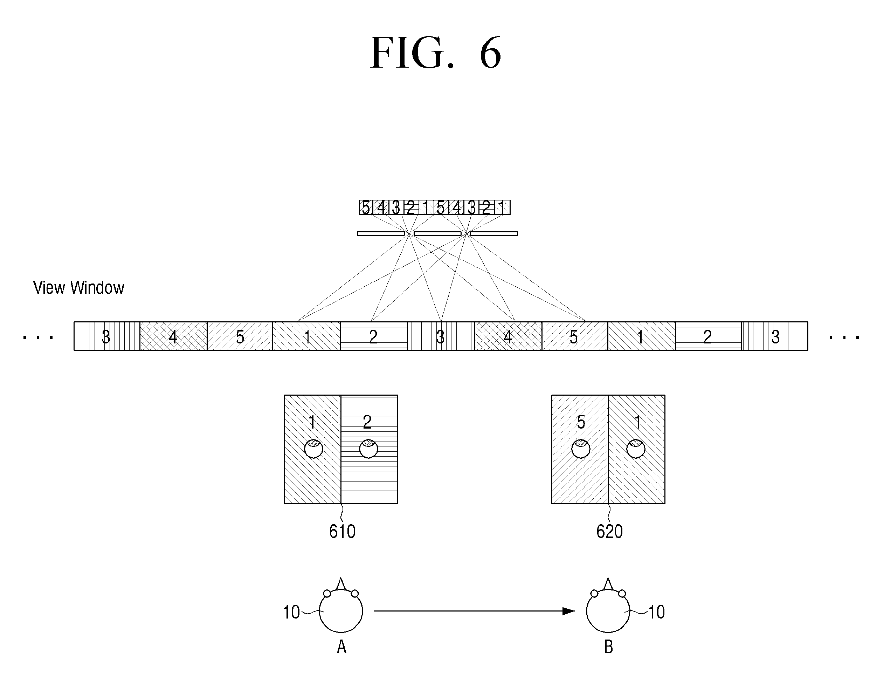

FIGS. 6 through 8 are views illustrating an operation mode that is switched from a 3D mode to a 2D mode, according to various exemplary embodiments.

As shown in FIG. 6, the display apparatus 100 may switch an operation mode of a display unit from a 3D mode to a 2D mode based on a horizontal viewing position of a viewer.

In detail, if a viewer 10 moves into a pseudo stereo zone when viewing a glassless multiview image, the display apparatus 100 may switch the 3D mode to the 2D mode to provide a 2D image. Here, the pseudo stereo zone refers to a viewing position in which views arranged in reverse orders in the glassless multiview image are incident onto left and right eyes of the viewer.

For example, as shown in FIG. 6, if it is determined that the viewer 10 moves from position A to position B when a 3D image is provided, based on viewer images 610 and 620, the display apparatus 100 may switch the 3D mode to the 2D mode to provide a 2D image. Here, in the position A, first and second views arranged at Normal Stereo are incident onto left and right eyes of the viewer 10. Also, in the position B, five and first views arranged at Pseudo Stereo are incident onto the left and right eyes of the viewer 10.

Here, a position of the viewer 10 may be determined through a calibration work performed between a display position of a multiview image and a viewing position of the viewer 10. For example, when the calibration work is completed in a position in which multiview images are respectively provided in the viewing position of the viewer 10, the display apparatus 100 may determine which views are seen by the viewer 10, i.e., which views the left and right eyes of the viewer 10 are positioned on, according to a movement position of the viewer 10. The display apparatus 100 may determine whether the viewer 10 is in a pseudo stereo zone based on this work

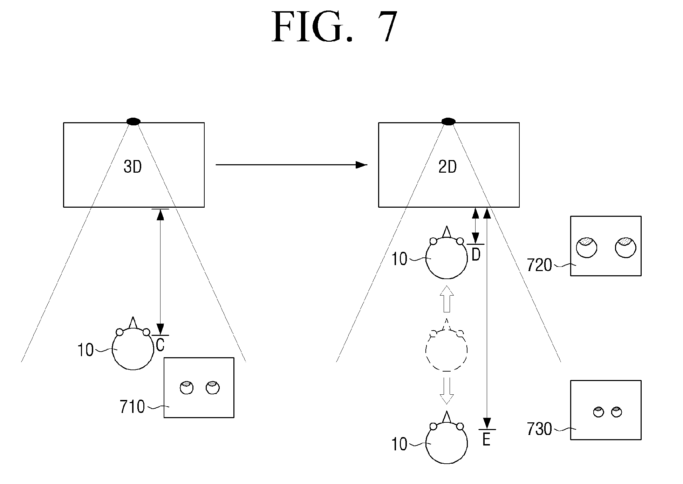

Also, as shown in FIG. 7, the display apparatus 100 may switch the operation mode of the display unit from the 3D mode to the 2D mode based on a viewing distance of the viewer 10.

In detail, if the viewer 10 moves into a position straying from an optimum viewing distance when viewing a glassless multiview image in the 3D mode, the display apparatus 100 may switch the 3D mode to the 2D mode to provide a 2D image.

For example, as shown in FIG. 7, if it is determined that the viewer 10 moves into position D or E straying from an optimum viewing distance when viewing the glassless multiview image in the 3D mode in position C, the display apparatus 100 may switch the 3D mode to the 2D mode to provide the 2D image. The display apparatus 100 may determine the viewing distance of the viewer 100 based on viewer captured images 710, 720, and 730. As non-limiting examples, the display apparatus 100 may determine the viewing distance of the viewer 100 based on face sizes, sizes of eyes, eye positions, etc. included in the viewer captured images 710, 720, and 730.

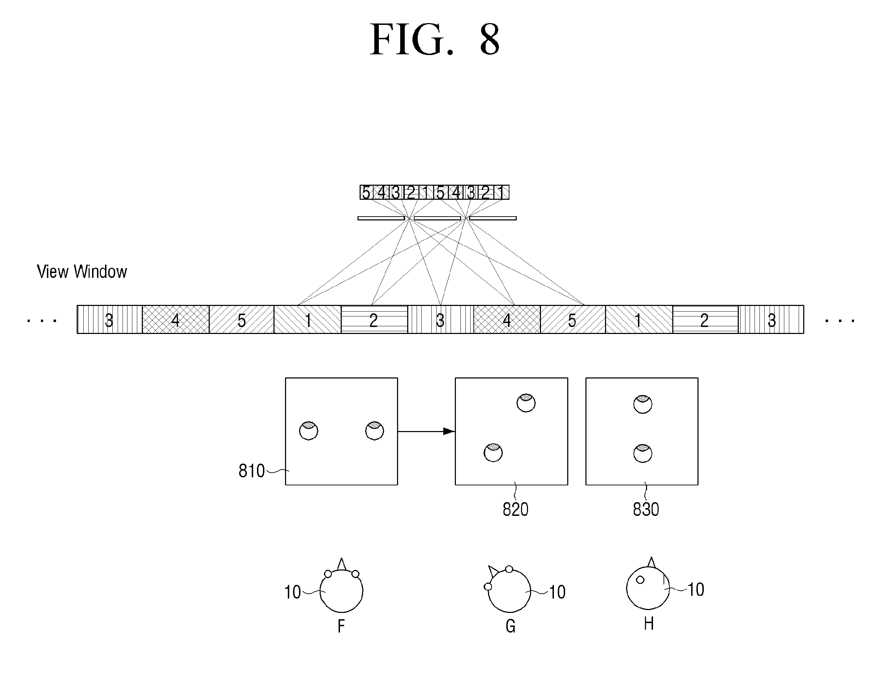

Also, as shown in FIG. 8, the display apparatus may switch the 3D mode to the 2D mode based on a viewing posture of the viewer 10.

In detail, if a posture of the viewer 10 is changed into a posture inappropriate for viewing a 3D image when the viewer 10 views the glassless multiview image in the 3D mode, the display apparatus 100 may switch the 3D mode to the 2D mode to provide the 2D image.

For example, as shown in FIG. 8, if the viewer 10 changes a posture from a correct posture, i.e., posture F in which two image views of a Normal Stereo zone of a multiview image are incident onto left and right eyes of the viewer 10, into an incorrect posture, i.e. G or H, which is inappropriate for the viewer 10 to view the 3D image. The display apparatus 100 may switch the 3D mode to the 2D mode to provide the 2D image. In this case, the display apparatus 100 may determine a viewing posture of the viewer 10 based on face shapes, shapes of eyes, etc. included in viewer captured images 810, 820, and 830 but is not limited thereto.

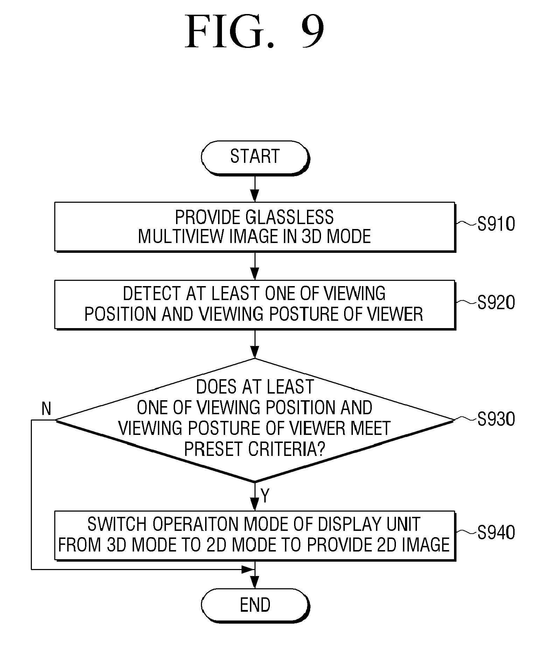

FIG. 9 is a flowchart of a method of controlling a display apparatus, according to an exemplary embodiment.

Referring to FIG. 9, in operation S910, a display unit provides a glassless multiview image in a 3D mode. For example, the display unit may operate in the 3D mode according to a 3D image viewing command of a viewer.

In operation S920, at least one of a viewing position and a viewing posture of the viewer is detected.

If at least one of the viewing position and the viewing posture of the viewer detected in operation S920 meets a preset criteria in operation S930, an operation mode of the display unit is switched from the 3D mode to the 2D mode to provide a 2D image in operation S940.

As a non-limiting example, if it is determined that the viewing position of the viewer corresponds to a position in which the viewer views an image corresponding to a pseudo stereo zone of a multiview image, the 3D mode may be switched to the 2D mode to provide the 2D image in operation S940.

As another non-limiting example, if it is determined that the viewing position of the viewer corresponds to a position straying from a preset distance range from a display apparatus, the 3D mode is switched to the 2D mode to provide the 2D image in operation S940.

As another non-limiting example, if it is determined that the viewing posture of the viewer corresponds to a posture in which light corresponding to the multiview image is not incident onto left and right eyes of the viewer, the 3D mode may be switched to the 2D mode to provide the 2D image in operation S940.

The display unit may include a display panel in which a plurality of images having different views are sequentially and repeatedly arranged, a lens unit that is disposed in front of the display panel to provide a multiview corresponding to different views of viewing zones, and a polarizing panel that is disposed between the display panel and the lens unit.

In this case, in operation S940, the polarizing panel may be controlled to convert a polarization direction of light incident from the display panel onto the lens unit into a direction different from the 3D mode to turn off a function of the lens unit.

The method of FIG. 9 may further include capturing the viewer. Also, in operation S920, at least one of the viewing position and the viewing posture of the viewer may be detected from the captured image based on at least one of positions, shapes, and sizes of eyes of the viewer.

Also, if at least one of the viewing position and the viewing posture of the viewer may meet a preset criteria to switch an operation mode of the display unit from the 3D mode to the 2D mode, a notification message may be provided. The notification message may be provided as at least one of a message displayed on a screen and a voice message

According to one or more exemplary embodiments described above, an image of type appropriate for at least one of a viewing position and a viewing posture of a viewer may be provided. Also, a viewer who is in a viewing position or posture inappropriate for viewing a 3D image may be included into an optimum viewing position and posture so as to provide a high-quality 3D image.

A method of controlling a display apparatus according to various exemplary embodiments described above may be embodied as a program and then provided to the display apparatus.

For example, there may be provided a non-transitory computer-readable medium that stores a program performing operations: detecting at least one of a viewing position and a viewing posture of a viewer; and if at least one of the viewing position and the viewing posture of the viewer meets a preset criteria, switching an operation mode of a display unit from a 3D mode to a 2D mode. The non-transitory computer-readable medium refers to a medium which does not store data for a short time such as a register, a cache memory, a memory, or the like but semi-permanently stores data and is readable by a device.

The above-described various applications or programs may be stored and provided on a non-transitory computer readable medium such as a CD, a DVD, a hard disk, a blue-ray disk, a universal serial bus (USB), a memory card, a ROM, or the like.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus (100) comprising:
a display (110) configured to switch an operation mode of the display between a 3-dimensional, 3D, mode and a 2-dimensional, 2D, mode and provide a multiview image in the 3D mode;
a detector (120) configured to detect at least one of a viewing position and a viewing posture of a viewer; and
a controller (130) configured to, in response to at least one of the viewing position and the viewing posture of the viewer meeting a preset criteria, control the display to switch an operation mode of the display from the 3D mode to the 2D mode and to provide a 2D image.

2. The display apparatus (100) of claim 1, wherein, in response to the detector (120) detecting that the viewing position of the viewer corresponds to a pseudo stereo zone of the multiview image, in which zone views are arranged in reverse order in the multiview image, the controller (130) is further configured to control the display to switch from the 3D mode to the 2D mode and to provide the 2D image.

3. The display apparatus (100) of claim 1 or 2, wherein, in response to the detector (120) detecting that the viewing position of the viewer corresponds to a position straying from a preset distance range from the display apparatus, the controller (130) is further configured to control the display to switch from the 3D mode to the 2D mode and to provide the 2D image.

4. The display apparatus (100) of any one of claims 1 to 3, wherein, in response to the detector (120) detecting that the viewing posture of the viewer corresponds to a posture in which light corresponding to the multiview image is not incident onto left and right eyes of the viewer, the controller (130) is further configured to control the display to switch from the 3D mode to the 2D mode and to provide the 2D image.

5. The display apparatus (100) of any one of claims 1 to 4, wherein the display (110)comprises:
a display panel (111) configured to display a plurality of images that have different views and are sequentially and repeatedly arranged;
a lens unit (112) configured to be disposed in front of the display panel to provide a multiview corresponding to different views of viewing zones; and
a polarizing panel (114) configured to be disposed between the display panel and the lens unit.

6. The display apparatus (100) of claim 5, wherein the controller (130) is further configured to control the polarizing panel (114) to change a polarization direction of light incident from the display panel onto the lens unit (112) in the 2D mode into a direction different from the 3D mode in order to turn off a function of the lens unit.

7. The display apparatus (100) of any one of claims 1 to 6, further comprising:
an imaging unit configured to capture an image of the viewer,
wherein the detector (120) is further configured to detect at least one of the viewing position and the viewing posture of the viewer from the captured image based on at least one of positions, shapes, and sizes of eyes of the viewer.

8. The display apparatus (100) of any one of claims 1 to 7, wherein in response to the operation mode of the display unit switching from the 3D mode to the 2D mode, the controller (130) is further configured to provide a notification message.

9. The display apparatus (100) of any one of claims 1 to 8, wherein the notification message comprises at least one of a display message and a voice message.

10. A method of controlling a display apparatus (100), the method comprising:
operating a display in a 3D mode, wherein the display unit provides a multiview image in the 3D mode;
detecting at least one of a viewing position and viewing posture of a viewer; and
in response to at least one of the viewing position and the viewing posture of the viewer meeting a preset criteria, switching an operation mode of the display from the 3D mode to a 2D mode and providing a 2D image.

11. The method of claim 10, wherein the switching comprises switching, in response to the viewing position of the viewer corresponding to a pseudo stereo zone of the multiview image, in which zone views are arranged in the reverse orders in the multiview image, the display from the 3D mode to the 2D mode and providing the 2D image.

12. The method of claim 10 or 11, wherein the switching comprises switching, in response to the viewing position of the viewer corresponding to a position straying a preset distance range from the display apparatus, the display from the 3D mode to the 2D mode and providing the 2D image.

13. The method of anyone of claims 10 to 12, wherein the switching comprises switching, in response to the viewing posture of the viewer corresponding to a posture in which light corresponding to the multiview image is not incident onto left and righty eyes of the viewer, the display from the 3D mode to the 2D mode and providing the 2D image.

14. The method of anyone of claims 10 to 13, wherein the display comprises:
a display panel configured to display a plurality of images that have different views and are sequentially and repeatedly arranged;
a lens unit configured to be disposed in front of the display panel to provide a multiview corresponding to different views of viewing zones; and
a polarizing panel configured to be disposed between the display panel and the lens unit.

15. The method of claim 14, wherein the polarizing panel is controlled to change a polarization direction of light incident from the display panel onto the lens unit in the 2D mode into a direction different from the 3D mode in order to turn off a function of the lens unit.
